# EUROPÄISCHE PATENTSCHRIFT

(11) **EP 3 040 594 B1**
(45) Veröffentlichungstag und Bekanntmachung des Hinweises auf die Patenterteilung: **21.03.2018**
(21) Anmeldenummer: 16151928.5
(22) Anmeldetag: 01.07.2013
(51) Int. Cl.: F16L 37/113, F16L 25/00, F23J 13/04

(54) **ABGASROHR SOWIE ABGASROHRSYSTEM**
EXHAUST PIPE AND EXHAUST PIPE SYSTEM
TUYAU DE GAZ D'ECHAPPEMENT ET SYSTEME DE TUYAU DE GAZ D'ECHAPPEMENT

(30) Priorität: 01.02.2013 DE 102013101067
(43) Veröffentlichungstag der Anmeldung: 06.07.2016
(62) Teilanmeldung aus: 13174531.7
(73) Patentinhaber: Bächle, Stefano, 8597 Landschlacht (CH)
(72) Erfinder: BÄCHLE, Stefano, 8597 Landschlacht (CH)
(74) Vertreter: Patentanwälte Behrmann Wagner PartG mbB

(56) Entgegenhaltungen:
- EP-A1- 0 522 410
- EP-A1- 2 000 723
- EP-A2- 1 024 321
- EP-A2- 1 286 099
- DE-A1- 19 509 579
- DE-A1-102005 020 603
- DE-A1-102005 045 482
- FR-A- 1 238 369
- US-A- 3 929 359
- US-A- 5 165 732
- US-A1- 2005 121 912
- US-A1- 2007 257 487

## Beschreibung

Die Erfindung betrifft ein Abgasrohrsystem mit einem, bevorzugt einstückig im Extrusionsblasverfahren hergestellten, Abgasrohr aus Kunststoff, welches bevorzugt als einstückiger Rohrstrang ausgebildet ist, mit abwechselnd angeordneten starren, bevorzugt zylindrischen Glattrohr- und biegbaren Wellrohrabschnitten oder einem aus einem derartigen Abgasrohr abgetrennten Abgasrohrabschnitt sowie ein Sicherungselement gemäß dem Oberbegriff des Anspruchs 1. Ferner betrifft die Erfindung ein Verfahren zum Festlegen eines Abgasrohres an einem Rohrstück gemäß Anspruch 12.

Aus der EP 1 024 321 B1 des Anmelders ist ein Abgasrohr aus Kunststoff mit abwechselnd angeordneten starren Glattrohr- und biegbaren Wellrohrabschnitten bekannt. Das bekannte Abgasrohr bildet einen Rohrstrang, aus dem Abgasrohrabschnitte, umfassend jeweils zwei endseitige starre Glattrohrabschnitte und mindestens einen biegbaren Wellrohrabschnitt beispielsweise durch Sägen oder Schneiden heraustrennbar sind, insbesondere um winklig zueinander angeordnete oder parallel versetzte starre Rohrstücke (flexibel) über den Abgasrohrabschnitt miteinander zu verbinden, in dem die Glattrohrabschnitte des Abgasrohrs oder des daraus abgetrennten Abgasrohrabschnittes in entsprechende Aufnahmen, insbesondere Muffen der versetzt zueinander angeordneten starren Abgasrohre eingeschoben werden. Die Abdichtung des Abgasstroms erfolgt über in Ringnuten der Muffenrohre angeordnete Dichtungen. Zur axialen Sicherung des Abgasrohrs oder des Abgasrohrabschnittes mit seinen Glattrohr und Wellrohrabschnitten ist es bekannt, in der die Dichtung aufnehmenden Ringnut einen Federring aufzunehmen, der sich radial innen an einem Glattrohrabschnitt des Abgasrohres bzw. des Abgasrohrabschnittes abstützt und dieses klemmend fixiert.

Das bekannte Abgasrohr mit seinen abwechselnden starren Glattrohr- und biegbaren Wellrohrabschnitten hat sich hervorragend in der Praxis bewährt. Es bestehen jedoch Bestrebungen, die Montage des Abgasrohres und insbesondere die axiale Sicherung des Abgasrohres an, insbesondere als Muffenrohr ausgebildeten Rohren zu erleichtern.

Auf dem fachfremden Gebiet der Ableitung von feuchter Luft aus Wäschetrocknern ist ein in der US 7,240,930 B2 beschriebenes Wellrohr bekannt, welches keine abwechselnden Glatt- und Wellrohrabschnitte aufweist, sondern durch axial durchgehend gewindeförmig gewellt ist. Die Verbindung zu benachbarten Rohren erfolgt unmittelbar über eine Gewindeverbindung. Eine Abdichtung, wie sie bei Abgasrohren zwingend ist, ist mit der bekannten Technologie nicht realisierbar. Auch ist nicht erkennbar, wie mit dem bekannten Wellrohr sinnvoller Weise eine dichte Verbindung mit einem Muffenrohr herstellbar sein soll.

Aus der US 5,165,732 A ist ein mehrteiliges, metallisches Abgasrohr gezeigt, welches durch Umbördeln verlängerbar, jedoch nicht an beliebiger Stelle kürzbar ist. Das bekannte Abgasrohr weist anders als ein gattungsbildendes Abgasrohr lediglich einen einzigen Wellrohrabschnitt auf, der zwischen zwei Glattrohrabschnitten aufgenommen ist, die als von dem Wellrohrabschnitt separate metallische Bauteile ausgebildet sind. Die Glattrohrabschnitte sind über Nieten mit dem Wellrohrabschnitt verbunden. Den separaten metallischen Glattrohrabschnitten sind Bajonettverschlüsse zugeordnet. Eine Kürzung des bekannten metallischen Abgasrohres dahingehend, dass ein Abgasrohrabschnitt mit einem Wellrohrabschnitt und zwei endseitigen Glattrohrabschnitten resultiert, ist nicht möglicht.

Aus der EP 1 286 099 A2 ist ein Wellrohr bekannt, das endseitig an einem Konusabschnitt Bajonettverschlussmittel aufweist.

Die US 3,929,359 A beschreibt eine endseitige Schnappverbindung zum miteinander Verbinden von zwei Wellrohren.

Die EP 0 522 410 A1 beschreibt eine Gewindeverbindung von zwei Wellrohren.

Die EP 2 000 723 A1 beschreibt ein Abgasrohrsystem, wobei Rohre jeweils umfassend Glatt- und spiralförmige Wellrohrabschnitte durch einfaches Ineinandersecken verbunden werden.

Die DE 19 509 579 A1 beschreibt Edelstahlrohre mit ausschließlich endseitigen Bajonettverschlüssen.

Die US 2007/0257487 A1 zeigt starre Rohre mit endseitigen Bajonettverschlüssen.

Die DE 10 2005 045 482 A1 zeigt ein Gasrohr mit abwechselnd angeordneten starren Glattrohr- und biegbaren Wellrohrabschnitten, wobei die Sicherung des Abgasrohres oder eines daraus abgetrennten Abgasrohrstrangs durch Hintergreifen einer Welle eines Wellrohrabschnittes erfolgt.

Der Erfindung liegt daher die Aufgabe zugrunde, ein hinsichtlich seiner Montierbarkeit optimiertes System mit einem bezüglich seiner axialen Sicherbarkeit verbesserten Abgasrohr anzugeben. Bevorzugt soll auf die im Stand der Technik notwendigen Federringe zur axialen Sicherung des Abgasrohres verzichtet werden können. Darüber hinaus besteht die Aufgabe darin, ein Verfahren zur komfortablen Handhabung eines nach dem Konzept der Erfindung ausgebildeten Abgasrohres im Rahmen des Abgasrohrsystems anzugeben.

Diese Aufgabe wird hinsichtlich des Agasrohrsystems mit den Merkmalen des Anspruchs 1 gelöst. Hinsichtlich des Verfahrens wird die Aufgabe mit den Merkmalen des Anspruchs 12 gelöst.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, am Abgasrohr des Abgasrohrsystems integrale, d.h. einstückig mit dem Abgasrohr ausgebildete Sicherungsmittel vorzusehen, d.h. bei dessen Herstellung anzuformen, die derart ausgebildet sind, dass an diesen ein, bevorzugt hülsenförmiges Sicherungselement durch eine Relativdrehbewegung zum Abgasrohr zum Herstellen eines in axialer Richtung wirksamen Formschlusses festlegbar ist. Anders ausgedrückt umfasst das nach dem Konzept der Erfindung ausgebildete Abgasrohr integrale Sicherungsmittel, die ein Eindrehen eines von dem Abgasrohr separaten Sicherungselementes ermöglichen, derart, dass das Abgasrohr nach dieser Relativdrehbewegung gegen axiales Abziehen am Sicherungselement gesichert bzw. gehalten ist. Bevorzugt durchsetzt dabei das Abgasrohr das Sicherungselement in axialer Richtung. Das nach dem Konzept der Erfindung ausgebildete Abgasrohr zeichnet sich dadurch aus, dass ohne größeren Aufwand die erfindungsgemäßen Sicherungsmittel bei der Herstellung des Abgasrohres angeformt, d.h. vorgesehen werden können und es hierfür keines separaten Produktionsschrittes bedarf. Darüber hinaus zeichnet sich ein nach dem Konzept der Erfindung ausgebildetes Abgasrohr durch eine äußerst komfortable Handhabbarkeit beim axialen Sichern auf, da das axiale Sichern an einem benachbarten Rohrstück dadurch erfolgt, dass ein Sicherungselement, welches bevorzugt an dem benachbarten Rohrstück in axialer Richtung gesichert ist, durch Relativverdrehen zu dem Abgasrohr, genauer zu dessen Sicherungsmitteln, an diesem festlegbar ist, derart, dass ein in axialer Richtung wirksamer Formschluss resultiert, d.h. derart, dass das Sicherungselement mit seinen Eingriffsmitteln die Sicherungsmittel des Abgasrohres in Umfangsrichtung hintergreift. Hierdurch kann auf die vergleichsweise aufwändig zu fixierenden Federringe aus dem Stand der Technik verzichtet werden. Bevorzugt ist der Formschluss durch entsprechendes Verdrehen des Sicherungselementes, insbesondere entgegen einer Aufdrehrichtung, insbesondere nach Überwinden einer Arretierkraft (z.B. Klemmkraft) wieder lösbar.

Bevorzugt sind die axialen Sicherungsmittel und/oder die Eingriffsmittel des Sicherungselementes derart ausgebildet, dass gleichzeitig beim Relativverdrehen des Sicherungselementes relativ zu dem Abgasrohr eine Axialkraftkomponente erzeugt wird, die das Sicherungselement und das vorzugsweise axial an einem benachbarten Rohrstück gesicherte Sicherungselement axial gegeneinander verspannt. Dies kann dadurch erreicht werden, dass die Eingriffsmittel des Sicherungselementes und/oder die Sicherungsmittel des Abgasrohres einen Steigungsabschnitt aufweisen, der die gewünschte Axialkraftkomponente erzeugt. Ganz besonders bevorzugt ist es, wie später noch erläutert werden wird, wenn die Sicherungsmittel Arretiermittel aufweisen, um das Sicherungselement, insbesondere durch Verrasten mit den Arretiermitteln gegen ein unbeabsichtigtes Losdrehen zu sichern.

Insgesamt weist das erfindungsgemäße Abgasrohr demnach eine Vielzahl von Vorteilen gegenüber dem Stand der Technik auf, ohne auf die bekannten Vorteile zu verzichten. So ist es weiterhin möglich und beabsichtigt, aus einem bevorzugt als Rohrstrang ausgebildeten Abgasrohr beliebig lange Rohrabschnitte z.B. durch Sägern oder Schneiden herauszutrennen, umfassend zwei endseitige Glattrohrabschnitte und mindestens einen Wellrohrabschnitt. Bevorzugt ist der Innendurchmesser der Glattrohrabschnitte zumindest näherungsweise gleich groß wie ein Innendurchmesser der Wellrohrabschnitte im Bereich von dessen Wellentälern.

Im Hinblick auf die Ausgestaltung der Glattrohrabschnitte, insbesondere im Hinblick auf deren Axialerstreckung gibt es unterschiedliche Möglichkeiten. Bevorzugt ist die Axialerstreckung der Glattrohrabschnitte so gewählt, dass bei einer näherungsweise mittigen Trennung eines Glattrohrabschnittes zwei Rohre resultieren, deren endseitige, zunächst aus einem gemeinsamen Glattrohrabschnitt resultierende Glattrohrabschnitte so lang bemessen sind, dass beide dichtend jeweils in einem Muffenrohr mit Innendichtung aufgenommen werden können. Um dies zu erreichen ist weiterbildungsgemäß vorgesehen, dass die Axialerstreckung der Glattrohrabschnitte mehr als 8cm, vorzugsweise mehr als 10cm beträgt und ganz besonders bevorzugt aus einem Wertebereich zwischen etwa 9cm und 15cm gewählt ist. Unabhängig von der Längenerstreckung der Glattrohrabschnitte ist es besonders bevorzugt, wenn die Glattrohrabschnitte eine Mittenmarkierung zur Markierung der axialen Mitte aufweisen, wobei es sich weiter bevorzugt um eine vollumfängliche Markierung, beispielsweise in Form einer umlaufenden Nut und/oder Radialerhebung handelt.

Im Hinblick auf die Ausbildung der Wellenkontur der Wellen des Wellrohrabschnittes gibt es unterschiedliche Möglichkeiten. Bevorzugt handelt es sich längsschnittlich um eine gerundete Wellenkontur, wobei es selbstverständlich auch denkbar ist, eine eckige, beispielsweise rechteckige Wellenkontur zu realisieren.

Erfindungsgemäß ist vorgesehen, dass mehrere axial beabstandete Sicherungsmittel am Abgasrohr vorgesehen sind, derart, dass jedem Glattrohrabschnitt mindestens ein Sicherungsmittel zugeordnet ist, wobei selbstverständlich auch eine Ausführungsform realisierbar ist, bei welcher jedem Glattrohrabschnitt zwei axial beabstandete Sicherungsmittel (z.B. zwei Außengewindeabschnitte oder zwei Bajonettverschlussradialfortsätze) zugeordnet sind, um einen Glattrohrabschnitt des rohrstrangförmigen Abgasrohres in zwei selbstständige Glattrohrabschnitte von resultierenden Rohrabschnitten aufteilen zu können, wobei dann beide Glattrohrabschnitte mit jeweils einem Sicherungselement an einem Rohrstück fixierbar sind.

Im Hinblick auf die konkrete Ausbildung der integralen Sicherungsmittel des Abgasrohres gibt es unterschiedliche Möglichkeiten. Gemeinsam haben sämtliche Ausgestaltungsformen, dass die Sicherungsmittel durch Relativverdrehen eines Sicherungselementes in Umfangsrichtung die Sicherungsmittel hintergreifen können, um somit eine axiale Sicherung zu erreichen. Bevorzugt sind die Sicherungsmittel hierzu an zumindest einer in Umfangsrichtung gerichteten Seite offen bzw. hintergreifbar, so dass durch eine verdrehende Bewegung eine Axialsicherung erreicht werden kann.

Gemäß einer besonders bevorzugten ersten möglichen erfindungsgemäßen Ausführungsform umfassen die Sicherungsmittel einen oder sind ausgebildet als Außengewindeabschnitt zum Verschrauben mit einem Innengewindeabschnitt eines relativ zu dem Abgasrohr verdrehbaren Sicherungselementes, wobei hier die axiale Sicherung durch eine verschraubende Bewegung erfolgt. Ganz besonders bevorzugt ist es, wenn der Außengewindeabschnitt mindestens eine vollständige Gewindewindung umfasst.

Gemäß einer alternativen erfindungsgemäßen Ausführungsform umfassen die Sicherungsmittel oder sind die Sicherungsmittel ausgebildet als Teil eines Bajonettverschlusses, welcher komplettiert wird durch entsprechende Eingriffsmittel des Sicherungselementes. Hier weist das Abgasrohr Bajonettverschlussmittel, insbesondere mindestens zwei in Umfangsrichtung beabstandete, vorzugsweise mehr als zwei, insbesondere gleichmäßig in Umfangsrichtung verteilte, Radialfortsätze auf, die sich bevorzugt über einen Umfangswinkel von mindestens 5° in Umfangsrichtung erstrecken und die in Umfangsrichtung hintergriffen werden können von den Eingriffsmitteln des Sicherungselementes in der Art eines Bajonettverschlusses zur axialen Sicherung. In diesem Fall erfolgt die Fixierung durch eine kombinierte axiale Relativbewegung zwischen Sicherungselement und Abgasrohr und danach einer Verdrehbewegung des Sicherungselementes relativ zu dem vorzugsweise dann feststehenden Abgasrohr.

Im Hinblick auf die konkrete Ausgestaltung eines Außengewindeabschnittes der Sicherungsmittel gibt es wiederum unterschiedliche Möglichkeiten. So ist es denkbar, einen Außengewindeabschnitt zusätzlich zu einem (insbesondere sämtlichen) Wellrohrabschnitt(en) vorzusehen, insbesondere endseitig des Wellrohrabschnittes, wobei in diesem Fall der Wellrohrabschnitt bevorzugt wie im Stand der Technik aus einer Vielzahl von in axialer Richtung benachbarten, insbesondere aneinander angrenzenden Wellen besteht, wobei die Wellen nicht einander übergehen, sondern als voneinander separate Ringnuten ausgebildet sind, die in axialer benachbarten Radialebenen vorgesehen sind, bezogen auf eine Axialerstreckung eines abgerollten, langgestreckten Abgasrohres. Bevorzugt befindet sich zu beiden Axialseiten des Wellrohrabschnittes ein Außengewindeabschnitt.

Gemäß einer alternativen Ausführungsform werden die Wellrohrabschnitte jeweils, insbesondere vollständig bzw. axial durchgehend,von Außengewindeabschnitten gebildet. Hier sind dann nicht voneinander separate Wellen vorgesehen, sondern diese werden von einem mit einer Steigung versehenen Außengewinde gebildet, welches sich zwangsläufig nicht in separaten Radialebenen verläuft, sondern sich entlang der Axialerstreckung des Abgasrohres mit der vorgegebenen Steigung, entlang windet. Bevorzugt läuft das Außengewinde in einen hierzu axial benachbarten Glattrohrabschnitt aus, insbesondere in dem die Höhe (Radialerstreckung) der Gewindegangwindung des Außengewindes in Richtung Glattrohrabschnitt langsam in Umfangsrichtung abnimmt. Anders ausgedrückt steigt die Höhe in Umfangsrichtung der Gewindegangwindung ausgehend von dem Glattrohrabschnitt in Umfangsrichtung bevorzugt an.

Im Hinblick auf eine sehr einfache Fertigbarkeit des erfindungsgemäßen Abgasrohres mit integralen Sicherungsmitteln, insbesondere im Extrusionsblasformverfahren ist es bevorzugt, wenn die Sicherungsmittel innen hohl ausgebildet sind. Dies bedeutet, dass weiterbildungsgemäß die Sicherungsmittel von der Abgasrohrinnenseite her betrachet nut- oder rinnenförmig ausgebildet sind, insbesondere als sich nach radial außen und in Umfangsrichtung erstreckende, insbesondere langgestreckte Vertiefung.

Im Hinblick auf eine weiter optimierte Fertigbarkeit hat es sich weiter als vorteilhaft erwiesen, wenn die Abgasrohrwandstärke der Sicherungsmittel zumindest näherungsweise einer Abgasrohrwandstärke eines der Glattrohrabschnitte und/oder eines der Wellrohrabschnitte entspricht, wobei es besonders bevorzugt ist, wenn die Wandstärke des Abgasrohrs axial durchgängig zumindest näherungsweise konstant ist. Bevorzugt ist die Wandstärke aus einem Dickenbereich zwischen etwa 0,8 und 2,5mm gewählt, insbesondere zwischen 1 und 2mm. Ganz besonders bevorzugt beträgt die Wandstärke zumindest näherungsweise 1,2mm.

Wie eingangs bereits erwähnt, ist es besonders vorteilhaft, wenn die Sicherungsmittel nicht nur derart ausgebildet sind, dass eine axiale Sicherung erreicht werden kann. Besonders bevorzugt ist es, wenn diese, insbesondere durch Vorsehen einer entsprechenden Vertiefung und/oder Erhöhung zudem derart ausgebildet sind, dass das Sicherungselement einrasten bzw. einfedern kann, um somit Arretiermittel zu schaffen, die ein unbeabsichtigtes Losdrehen des Sicherungselementes in Umfangsrichtung verhindern.

Die Erfindung führt auch auf einen Abgasrohrabschnitt, der hergestellt ist durch Abtrennen eines Abschnittes von dem erfindungsgemäßen Abgasrohr. Der abgetrennte Abgasrohrabschnitt umfasst zwei endeitige Glattrohrabschnitte und mindestens einen Wellrohrabschnitt sowie integrale Sicherungsmittel benachbart zu dem jeweiligen Glattrohrabschnitt.

Die Erfindung führt auf ein Abgasrohrsystem umfassend ein wie zuvor beschriebenes ausgebildetes Abgasrohr und/oder ein aus einem derartigen Abgasrohr einen abgetrennten Rohrabschnitt mit zwei endseitigen und ggf. weiteren Glattrohrabschnitten und mindestens einem biegbaren Wellrohrabschnitt. Ferner umfasst das Abgasrohrssystem ein, bevorzugt hülsenförmiges Sicherungselement mit Eingriffsmitteln, wobei das Sicherungselement relativ zu dem Abgasrohr, insbesondere auf diesem verdrehbar ist, um durch eine Verdrehbewegung einen in axialer Richtung wirksamen Formschluss zwischen den Eingriffsmitteln und den Sicherungsmitteln des Abgasrohres zu bewirken, wobei die Eingriffsmittel hierbei bevorzugt die Sicherungsmittel in Umfangsrichtung hintergreifen und somit ein axiales Abziehen der Eingriffsmittel von dem Abgasrohr unterbinden. Besonders zweckmäßig ist es selbstverständlich, wenn das Abgasrohrsystem zusätzlich zu dem Abgasrohr und dem Sicherungselement mindestens ein weiteres Rohrstück umfassen, an dem die Eingriffsmittel axial, insbesondere durch radiales Hintergreifen eines Ringwulstes festgelegt sind, um somit das Rohrstück, welches selbstverständlich auch zum Durchleiten von Abgas dient und das Abgasrohr axial gegeneinander zu sichern. In dem vorgenannten Ringwulst befindet sich bevorzugt eine Ringdichtung, die radial außen an dem Glattrohrabschnitt des in das Rohr eingeführten Glattrohrabschnittes des Abgasrohres bzw. Abgasrohrabschnittes dichtend anliegt, um somit einen Austritt von Abgas sicher zu vermeiden.

Bevorzugt erfolgt gleichzeitig eine axiale Verspannung von Abgasrohr und Rohrstück, wobei hierzu vorzugsweise die Eingriffsmittel des Sicherungselementes und/oder die Sicherungsmittel es Abgasrohres mit einer entsprechenden Schräge zur Generierung einer axialen Spannkraft durch Relativverdrehen vom Sicherungselement zum Abgasrohr zu erzeugen bwz. zu bewirken.

Besonders zweckmäßig ist es, wenn das Sicherungselement mindestens einen Hintergriffabschnitt zum Hintergreifen, insbesondere eines Ringwulstes des weiter bevorzugt als Muffenrohr ausgebildeten weiteren Rohrstückes aufweist, wobei es bevorzugt ist, wenn mehrere solcher, insbesondere gleichmäßig in Umfangsrichtung beabstandeter Hintergriffabschnitte vorgesehen sind. Diese können beispielsweise laschenartig ausgebildet sein, bevorzugt jedoch derart, dass diese in radialer Richtung federn können, um das Sicherungselement axial auf das Rohrstück aufschieben zu können, insbesondere derart, dass ein Ringwulst des Rohrstückes, welcher bevorzugt im Inneren eine Dichtung zur radial äußeren Anlage an einem Glattrohrabschnitt des Abgasrohres aufweist, in radialer Richtung nach radial innen hintergriffen wird.

Die Erfindung führt auch auf ein Verfahren zum Festlegen eines nach dem Konzept der Erfindung ausgebildeten Abgasrohres oder eines daraus abgetrennten Rohrabschnittes, wobei erfindungsgemäß der Glattrohrabschnitt des Abgasrohres oder der Abgasrohrabschnitt in das Rohrstück eingesteckt wird, insbesondere derart, dass eine in einer Ringnut des Rohrstücks gehaltene Ringdichtung radial außen am Glattrohrabschnitt anliegt. Danach werden die Eingriffsmittel, die vorzugsweise von dem Abgasrohrabschnitt durchsetzt sind, relativ zu dem Abgasrohr verdreht, wodurch ein in axialer Richtung wirksamer Formschluss hergestellt wird. Ganz besonders bevorzugt ist es, wenn, insbesondere vor dem Relativverdrehen das Sicherungselement am Rohrstück axial gesichert wird, insbesondere indem das Sicherungselement auf das Rohrstück axial aufgeschoben wird, derart, dass das Sicherungselement einen Rohrschnittabschnitt, insbesondere einen Ringwulst in radialer Richtung nach innen umgreift. Für den Fall, dass entsprechend federnd ausgebildete Hintergriffabschnitte am Sicherungselement vorgesehen sind, kann das Aufschieben auch in der Befestigungsrichtung des Glattrohrabschnittes am Rohrstück erfolgen, indem die Hintergreifabschnitte über den Ringwulst des Rohrstückes geschoben werden und dann nach radial innen federn und das Sicherungselement in axialer Richtung sichern.

Weitere Vorteile, Merkmale und Einzelheiten der Erfindung ergeben sich aus der nachfolgenden Beschreibung bevorzugter Ausführungsbeispiele sowie anhand der Zeichnungen.
- Fig. 1a bis Fig. 1c: unterschiedliche, teilweise geschnittene Ansichten eines Ausschnittes eines aus einem Abgasrohr, umfassend eine Vielzahl von abwechselnd angeordneten Glattrohr- und Wellabschnitte, wobei integrale Sicherungsmittel des Abgasrohres als Teil eines Bajonettverschlusses ausgebildet sind,
- Fig.2a bis Fig. 2f: unterschiedliche, teilweise geschnittene Ansichten eines hülsenförmigen Sicherungselementes zur Bildung eines Abgasrohrsystems mit einem Abgasrohr gemäß den Fig. 1a bis 1c, wobei am Sicherungselement nach radial innen ragende Eingriffsmittel vorgesehen sind, zur Bildung eines Bajonettverschlusses mit den Sicherungsmitteln des Abgasrohres,
- Fig. 3a bis Fig. 3d: unterschiedliche, teilweise geschnittene Ansichten eines Abgasrohres, welches mittels eines Sicherungselementes axial an einem als Muffenrohrstück ausgebildeten Rohrstück festgelegt ist,
- Fig.4a und 4b: unterschiedliche, teilweise geschnittene Ansichten von zwei überein als Muffenrohrkupplungsstück ausgebildetes Rohrstück miteinander verbundene Abgasrohre, wobei die Abgasrohre jeweils über ein Sicherungselement axial an dem Rohrstück gehalten sind,
- Fig. 5a und Fig. 5b: unterschiedliche, teilweise geschnittene Ansichten eines Ausschnittes eines Abgasrohres mit integralen, als Außengewinde ausgebildeten Sicherungsmitteln,
- Fig. 6a und Fig. 6b: ein alternatives Ausführungsbeispiel eines nur ausschnittsweise dargestellten Abgasrohres, bei welchem zusätzlich zu einem klassischen Wellrohrabschnitt Außengewindeabschnitte als Sicherungsmittel vorgesehen sind, wobei die Außengewindeabschnitte in den Übergangsbereichen zu den angrenzenden Glattrohrabschnitten vorgesehen sind,
- Fig. 7: ein Sicherungselement mit als Innengewinde ausgebildeten Eingriffsmitteln zur Verwendung mit einem Abgasrohr gemäß den Fig. 5a und 5b und/oder Fig. 6a und 6b, und
- Fig. 8a und Fig. 8b: unterschiedliche Darstellungen eines Abgasrohrsystems, umfassend ein als Muffenrohr ausgebildetes Rohrstück, ein mit einem Glattrohrabschnitt hierin eingeführtes Abgasrohr sowie ein Sicherungselement mit innengewindeartigen Eingriffsmitteln, die mit dem Außengewinde des Abgasrohrs verschraubt sind.

In den Figuren sind gleiche Elemente und Elemente mit der gleichen Funktion mit den gleichen Bezugszeichen gekennzeichnet.

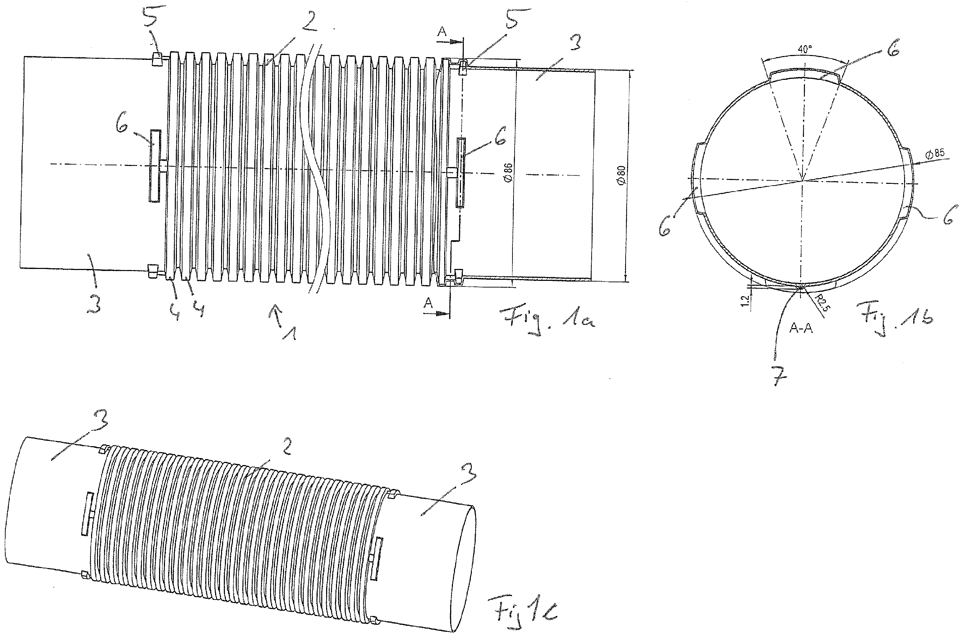

In den Figuren 1a bis 1c ist ein Ausschnitt eines ersten Ausführungsbeispiels eines Abgasrohres 1 aus Kunststoff gezeigt, welches im ExtrusionsBlasverfahren hergestellt wurde. Zu erkennen sind hier nur zwei rechts und links eines Wellrohrabschnittes 2 angeordnete zylindrische, starre Glattrohrabschnitte 3, wobei das Abgasrohr 1 bevorzugt eine Vielzahl von abwechselnd angeordneten Wellrohrabschnitten und Glattrohrabschnitten aufweist und noch weiter bevorzugt als Rohrstrang aufrollbar ist.

Jedenfalls dienen die Glattrohrabschnitte 3 zum axialen Einschieben in ein vorzugsweise als Muffenrohr ausgebildetes Rohrstück. In dem gezeigten Ausführungsbeispiel besteht der Wellrohrabschnitt aus einer Vielzahl von axial aneinander angrenzenden Wellen 4, die von innen her betrachtet als umfangsgeschlossene Ringnuten ausgebildet sind. Die Wellen 4 befinden sich in axial zueinander benachbarten, parallel radialebenen, d.h. sie sind steigungsfrei ausgebildet, wie dies von aus dem Stand der Technik beschriebenen Wellrohren bekannt ist. Die Kontur der Wellen 4 ist von außen her betrachtet zumindest näherungsweise trapezförmig, wobei auch andere Konturen, wie beispielsweise gerundete Konturen oder rechteckige Konturen realisierbar sind.

Im Gegensatz zu aus dem Stand der Technik bekannten Abgasrohren 1 weist das Abgasrohr 1 integrale Sicherungsmittel 5 auf, hier in Form von in Umfangsrichtung beabstandeten und jeweils auf der selben axialen Höhe befindlichen, nach radial außen weisenden Radialfortsätzen 6, die zusammen mit geeigneten Eingriffsmitteln eines später noch zu erläuternden Sicherungselementes in der Art eines Bajonettverschlusses eingreifen können.

Hierzu müssen die Eingriffsmittel durch axial zwischen zwei benachbarten Radialfortsätzen 6 hindurchgeschoben und dann in Umfangsrichtung verdreht werden, so dass sie die Radialfortsätze 6 in Umfangsrichtung hintergreifen.

Um ein unbeabsichtigtes Aufdrehen bzw. Losdrehen des Sicherungselementes zu verhindern, sind am Abgasrohr 1 angeformte Arretiermittel 7 vorgesehen, in die eine entsprechende Gegenkontur des Sicherungselementes eingreifen kann. In dem gezeigten Ausführungsbeispiel handelt es sich um eine radiale Erhöhung, die in eine entsprechende Ausnehmung des Sicherungselementes, bevorzugt federnd einrasten kann, so dass zum Losdrehen ein Widerstand überwunden werden muss.

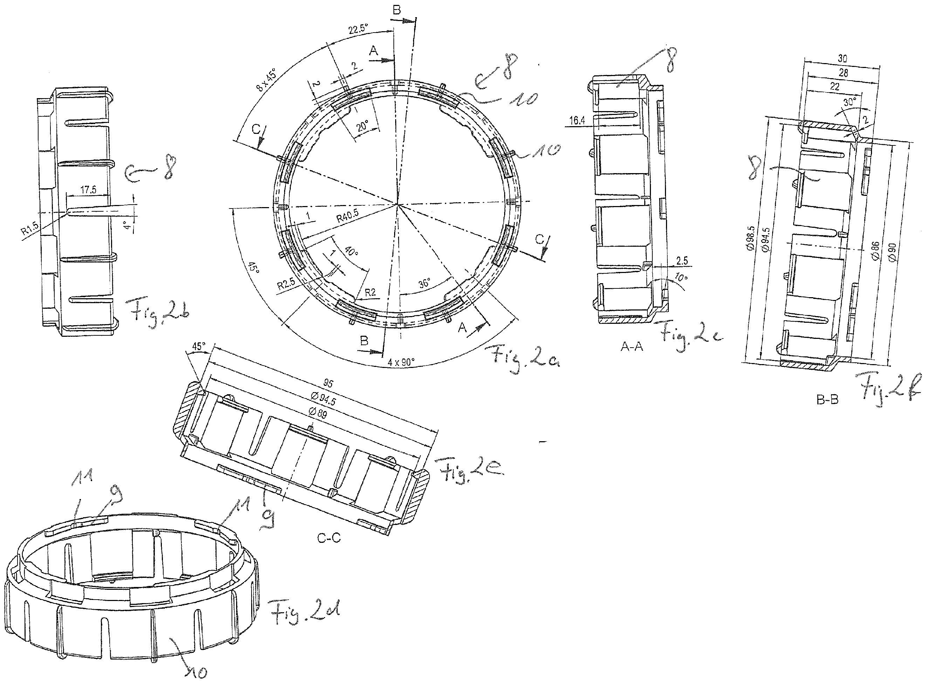

In den Fig. 2a bis 2f ist ein hülsenförmiges Sicherungselement 8 zum Zusammenwirken mit einem beispielhaft in den Fig. 1a bis 1c gezeigten Abgasrohr 1 dargestellt. Es handelt sich um ein Kunststoffspritzgussteil welches über nach radial innen weisende und in Umfangsrichtung beabstandete Radialfortsätze aufweisende Eingriffsmittel 9 verfügt, die durch Verdrehen relativ zu den Sicherungsmitteln 5 des Abgasrohres mit diesen in der Art eines Bajonettverschlusses zusammenwirken. Axial beabstandet von diesen Eingriffsmitteln 9 sind mehrere gleichmäßig in Umfangsrichtung beabstandete Hintergriffabschnitte 10 vorgesehen, die laschenartig ausgebildet sind und mit denen eine Ringwulst eines an dem Abgasrohr festzulegenden Rohrstückes übergriffen werden kann.

Zu erkennen ist, dass das Sicherungselement 8, welches im montierten Zustand von dem Abgasrohr 1 durchsetzt ist, Gegenarretiermittel 11 zum Verrasten mit den Arretiermitteln 7 des Abgasrohres 1 aufweist. Diese sind in dem gezeigten Ausführungsbeispiel was bevorzugt, jedoch nicht zwingend ist, an die Eingriffsmittel an- bzw. in diese eingeformt. Es handelt sich in dem gezeigten Ausführungsbeispiel um mindestens eine Vertiefung.

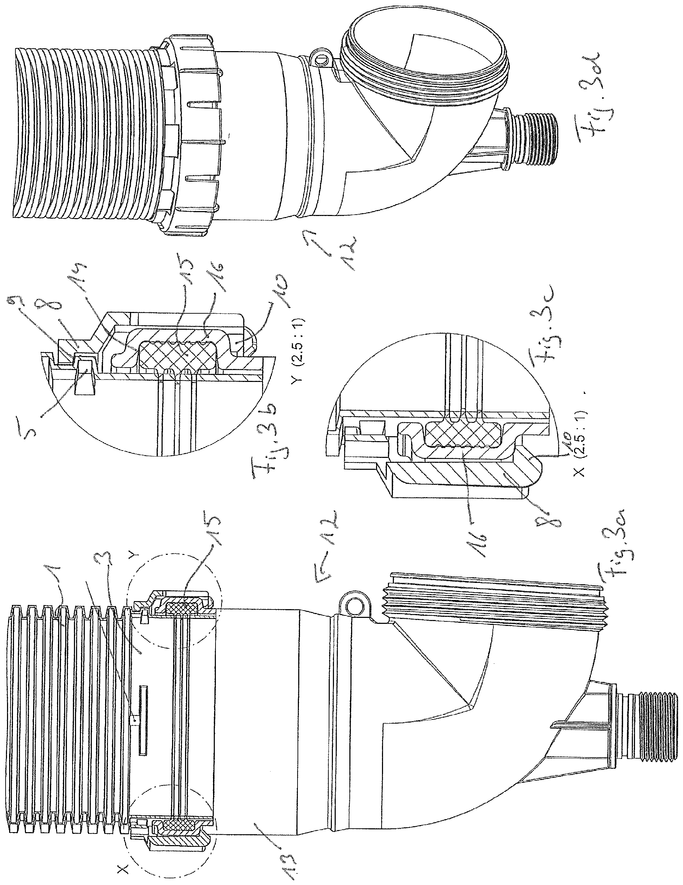

In den Fig. 3a bis 3d ist in teilweise geschnittenen und in den Fig. 3b und 3c jeweils in einer vergrößerten Detail-Darstellung gezeigtes Abgasrohrsystem 12 dargestellt, welches ein Abgasrohr 1 umfasst, welches mit einem Glattrohrabschnitt 3 in eine Muffe eines Rohrstückes 13 eingeschoben ist, derart, dass eine in einer eingeformten Ringnut 14 des Rohrstückes aufgenommene Ringdichtung 15 von radial außen nach radial innen dichtend am Außenumfang des Glattrohrabschnittes 3 anliegen kann.

Die Ringnut 14 bildet außen eine Ringwulst 16, welcher hintergriffen ist von den Hintergriffsabschnitten 10 des Sicherungselementes 8, welches mit seinen Eingriffsmitteln 9 die Sicherungsmittel 5 des Abgasrohres 1 in Umfangsrichtung hintergreift.

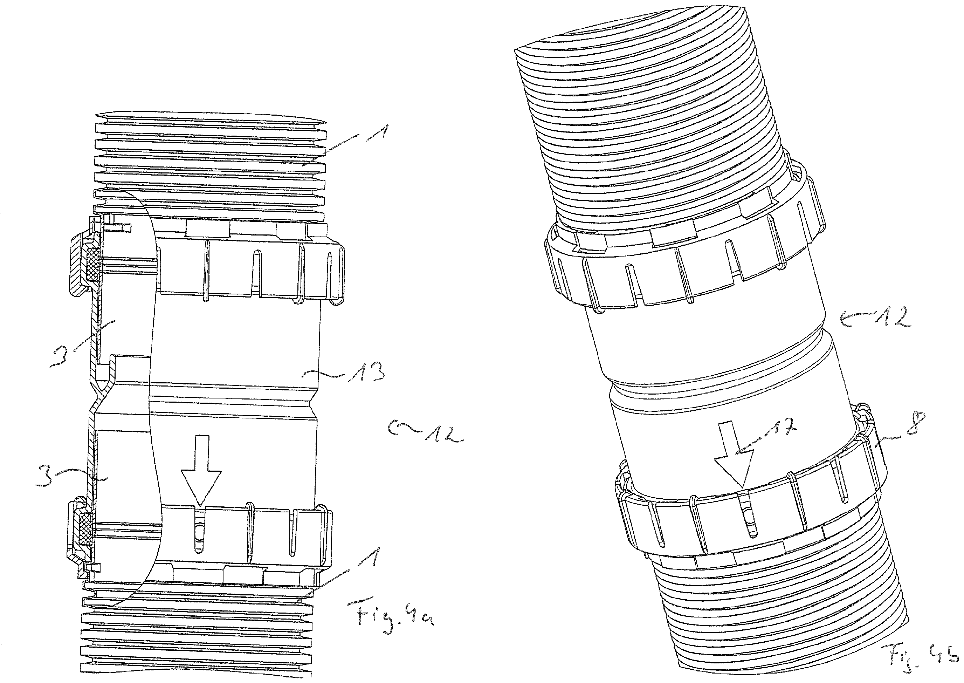

In den Fig. 4a und 4b ist ein weiteres Abgasrohrsystems 12 gezeigt, mit einem hier als Adapterstück ausgebildeten Rohrstück 13, welches sich durch zwei in unterschiedlicher Axialrichtung weisende Muffenrohrabschnitte auszeichnet. In jedem ist ein Glattrohrabschnitt 3 eines nach dem Konzept der Erfindung ausgebildeten Abgasrohres 1 aufgenommen. Eine hier beispielhaft als Pfeil ausgebildete Markierung 17 auf dem nur beispielhaft als Adapterstück ausgebildeten Rohrstück zeigt eine Umfangsposition an, auf welche das Sicherungselement 8 verdrehbar ist, damit eine axiale Sicherung gegeben ist und bevorzugt auch eine Arretierung gegen ungewolltes Lösen.

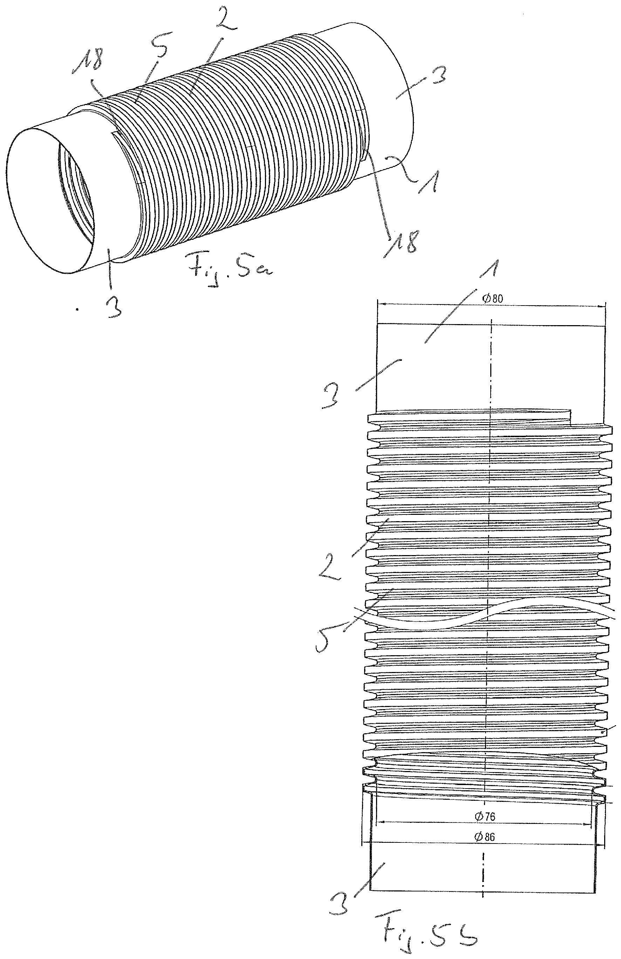

Fig. 5a und 5b zeigen ein alternatives Ausführungsbeispiel eines nur ausschnittsweise dargestellten Abgasrohres 1 mit Glattrohrabschnitten 3 und einem Wellrohrabschnitt 2, der in dem gezeigten Ausführungsbeispiel gleichzeitig die Sicherungsmittel 5 bildet. Hierzu ist der Wellrohrabschnitt 2 als Außengewinde ausgebildet. Anders ausgedrückt weisen die Wellen die Form eines Außengewindes auf, d.h. sie sind sich wendelnd mit einer Steigung angeordnet, wobei beide axiale Enden des Wellrohrabschnittes 2 als Gewindeeinlauf 18 ausgebildet sind, auf die in Umfangsrichtung ein Innengewinde eines entsprechend ausgebildeten Sicherungselementes aufschraubbar ist.

Wie auch bei den voranstehenden Ausführungsbeispielen sind die Sicherungsmittel 5 innen hohl bzw. als innere Vertiefung ausgebildet, nämlich als zwischen Umfangsrichtung erstreckende Rinnen, hier als sich in Umfangsrichtung erstreckende Rinnenspirale, wohingegen bei dem Ausführungsbeispiel gemäß Fig. 1b die dort als Bajonettverschlussteil ausgebildeten Sicherungsmittel 5 als in einer Radialebene ausgebildete, sich in Umfangsrichtung sowie in radialer Richtung nach außen erstreckende Vertiefungen ausgebildet sind.

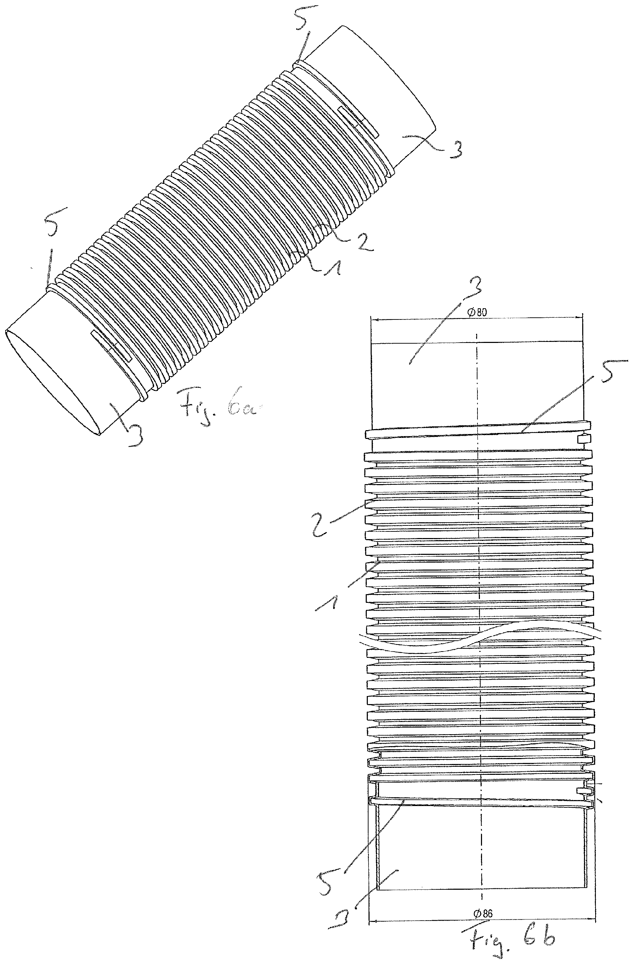

In den Fig. 6a und 6b ist ein weiteres alternatives Ausführungsbeispiel eines ausschnittsweise dargestellten Abgasrohres 1 gezeigt. Hier sind die Wellrohrabschnitte 2 klassisch ausgestaltet, d.h. nicht als Gewinde bzw. Wellen mit in Umfangsrichtung ansteigender Steigung, sondern vielmehr wie in dem Ausführungsbeispiel gemäß Fig. 1a bis 1c. Die Wellengeometrie umfasst mehrere axial benachbarte Wellen, die sich jeweils in einer Radialebene befinden. Jede Welle ist von innen her als umfangsgeschlossener Ring ausgebildet.

Es wechseln sich, wie bei dem Ausführungsbeispiel gemäß Fig. 1a und 1c Wellenberge und Wellentäler in axialer Richtung ab.

Benachbart zu jedem axialen Ende eines Wellrohrabschnittes 2 sind Sicherungsmittel 5 vorgesehen, die an das Abgasrohr 1 angeformt, d.h. einstückig mit diesem ausgebildet sind. Es handelt sich jeweils um einen Außengewindeabschnitt, der in dem gezeigten Ausführungsbeispiel aus etwas über einer Gewindewindung besteht, auf die ein Innengewinde eines entsprechend ausgebildeten Sicherungselementes zur axialen Sicherung aufschraubbar ist. Nicht gezeigt sind Arretiermittel, wobei diese auch bei den Ausführungsformen gemäß den Fig. 6a und 6b oder 5a und 5b vorgesehen sein können, beispielsweise als radiale Erhöhung oder Vertiefung in einer Außengewindewindung.

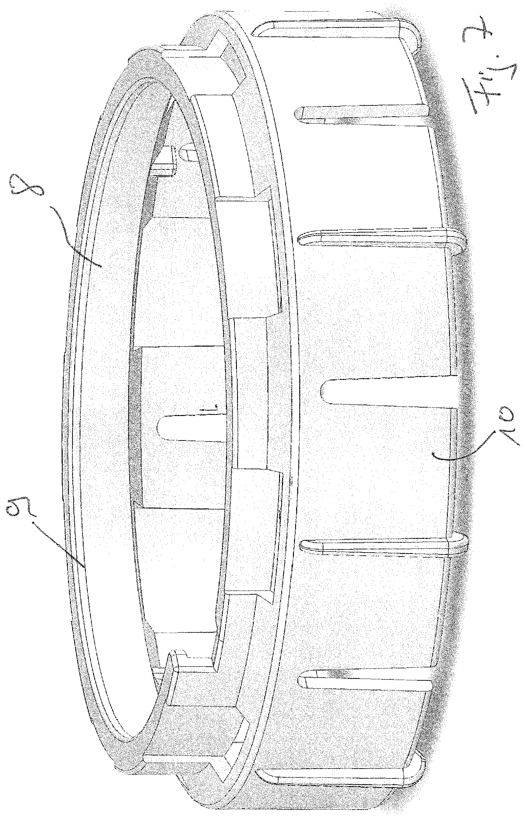

In Fig. 7 ist ein Sicherungselement 8 gezeigt. Dieses weist im Bereich eines axialen Endes laschenartige Hintergriffabschnitte zum Hintergreifen eines Ringwulstes eines muffenrohrartigen Rohrstückes auf, sowie axial beabstandet davon Eingriffsmittel 9 in der Form eines Innengewindes, welches auf ein Außengewinde Sicherungsmittel eines Abgasrohres derart abgestimmt ist, dass die Einriffsmittel 9 des Sicherungselementes 8 mit dem Außengewinde des Abgasrohres verschraubbar und dadurch das Sicherungselement 8 und in der Folge ein von dem Sicherungselement 8 gehaltenes Rohrstück axial an dem Abgasrohr gesichert sind.

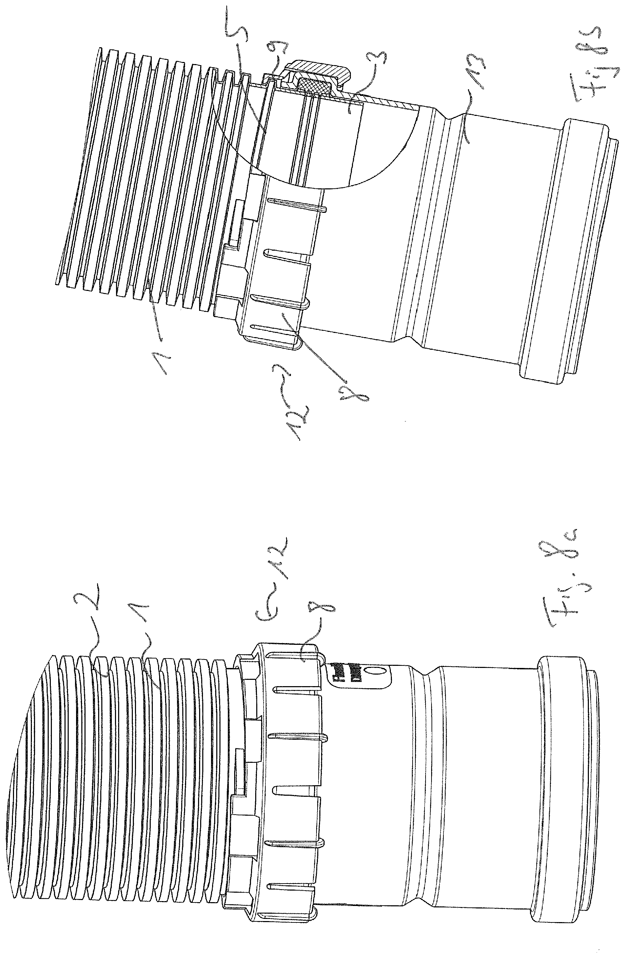

In den Fig. 8a und 8b ist in teilweise geschnittener Darstellung ein Abgasrohrsystem 12 gezeigt, wobei das Abgasrohr wie in dem Ausführungsbeispiel gemäß den Fig. 6a und 6b ausgebildet ist, wobei alternativ selbstverständlich auch ein Abgasrohr gemäß den Fig. 5a und 5b verwendet werden könnte.

Das Abgasrohr 1 umfasst einen Wellrohrabschnitt sowie einen in das benachbarte Rohrstück eingeführten Glattrohrabschnitt 3. Rohrstück 13 und Abgasrohr 1 sind über ein Sicherungselement 8, wie dieses beispielhaft in Fig. 7 dargestellt ist, axial aneinander gesichert. Hierzu greifen hier als Innengewinde ausgebildete Eingriffsmittel 9 des Sicherungselementes 8 und die als Außengewindeabschnitt ausgebildeten Sicherungsmittel 5 des Abgasrohres 1 in Umfangsrichtung ineinander, d.h. sind in dem konkreten Ausführungsbeispiel miteinander verschraubt. Das Innengewinde des Sicherungselementes 8 muss selbstverständlich kein vollständiges Innengewinde sein, es reicht hier ein Innengewindewindungsabschnitt. Wesentlich ist, dass die Eingriffsmittel 9 so ausgebildet sind, dass diese formschlüssig durch Verschrauben mit dem Außengewindeabschnitt des Abgasrohres 1 verschraubbar sind.

### Bezugszeichenliste

- 1: Abgasrohr
- 2: Wellrohrabschnitt
- 3: Glattrohrabschnitt
- 4: Wellen
- 5: Sicherungsmittel
- 6: Radialfortsatz
- 7: Arretiermittel
- 8: Sicherungselement
- 9: Eingriffsmittel
- 10: Hintergriffabschnitt(e)
- 11: Gegenarretiermittel
- 12: Abgasrohrsystem
- 13: Rohrstück
- 14: Ringnut
- 15: Ringdichtung
- 16: Ringwulst
- 17: Markierung
- 18: Gewindeeinlauf

## Patentansprüche

1. Abgasrohrsystem, umfassend ein Abgasrohr (1) aus Kunststoff, zur Abgasführung von Heizungsanlagen, vorzugsweise einstückig hergestellt im Extrusionsblasverfahren, mit abwechselnd angeordneten starren Glattrohrabschnitten (3) und biegbaren Wellrohrabschnitten (2), wobei aus dem Abgasrohr (1) ein Abgasrohrabschnitt mit mindestens einem Wellrohrabschnitt (2) und zwei endseitigen Glattrohrabschnitten (3) heraustrennbar ist, wobei an das Abgasrohr (1) einstückig mit dem Abgasrohr (1) ausgebildete Sicherungsmittel (5) angeformt und jedem der Glattrohrabschnitte Sicherungsmittel (5) zugeordnet sind, die derart ausgebildet sind, dass an diesen ein, bevorzugt hülsenförmiges, Sicherungselement (8) durch eine Relativdrehbewegung zum Abgasrohr (1) zum Herstellen eines in axialer Richtung wirksamen Formschlusses festlegbar ist, und dass die Sicherungsmittel (5) einen Außengewindeabschnitt zum Verschrauben mit einem Innengewindeabschnitt des Sicherungselementes (8) oder Bajonettverschlussmittel zum Zusammenwirken mit Gegenabschnitten des Sicherungselement (8) in der Art eines Bajonettverschlusses umfassen, oder umfassend einen aus einem derartigen Abgasrohr (1) abgetrennten Abgasrohrabschnitt mit zwei endseitigen Glattrohrabschnitten (3) und mit mindestens einem biegbaren Wellrohrabschnitt (2),
**dadurch gekennzeichnet,**
**dass** das Abgasrohrsystem ein, bevorzugt hülsenförmiges, Sicherungselement (8) umfasst, das Eingriffsmittel (9) aufweist, die derart ausgebildet sind, dass diese durch eine Relativdrehbewegung des Sicherungselementes (8) zum Abgasrohr (1) bzw. Abgasrohrabschnitt unter Ausbildung eines in axialer Richtung wirksamen Formschlusses mit den Sicherungsmitteln (5) des Abgasrohres (1) bzw.
des Abgasrohrabschnittes verbindbar und/oder verbunden sind.

2. Abgasrohrsystem nach Anspruch 1,
**dadurch gekennzeichnet,**
**dass** jedem Glattrohrabschnitt (3) Sicherungsmittel (5) entweder nur im Bereich eines axialen Endes oder an beiden axialen Endbereichen des jeweiligen Glattrohrabschnittes (3) zugeordnet sind.

3. Abgasrohrsystem nach einem der vorhergehenden Ansprüche,
**dadurch gekennzeichnet,**
**dass** die Wellrohrabschnitte (2) jeweils mehrere ringförmige und in axial benachbarten, parallelen Radialebenen bezogen auf eine Axialerstreckung des Abgasrohres (1) angeordnete Wellen aufweist und dass die Sicherungsmittel (5) axial benachbart zu den Wellen (4), insbesondere in einem an einen Glattrohrabschnitt (3) angrenzenden Bereich vorgesehen sind.

4. Abgasrohrsystem nach einem der vorhergehenden Ansprüche,
**dadurch gekennzeichnet,**
**dass** die Wellrohrabschnitte (2), zumindest abschnittsweise, bevorzugt axial durchgehend, die Sicherungsmittel (5) in Außengewindeform bilden.

5. Abgasrohrsystem nach einem der vorhergehenden Ansprüche,
**dadurch gekennzeichnet,**
**dass** die Sicherungsmittel (5) von der Abgasrohrinnenseite her betrachtet nut- oder rinnenförmig, insbesondere als sich nach radial außen und in Umfangsrichtung erstreckende Vertiefung ausgebildet sind.

6. Abgasrohrsystem nach einem der vorhergehenden Ansprüche,
**dadurch gekennzeichnet,**
**dass** eine Abgasrohrwandstärke der Sicherungsmittel (5) einer Abgasrohrwandstärke eines Glattrohrabschnitts (3) und/oder eines Wellrohrabschnittes (2) entspricht, insbesondere derart, dass die Wandstärke des Abgasrohrs (1) axial durchgängig, zumindest näherungsweise, konstant ist.

7. Abgasrohrsystem nach einem der vorhergehenden Ansprüche,
**dadurch gekennzeichnet, dass** das Abgasrohr, insbesondere die Sicherungsmittel (5) Arretiermittel, bevorzugt umfassend eine axiale und/oder radiale Vertiefung oder Erhöhung, aufweisen, die derart ausgebildet sind, dass das Sicherungselement (5), insbesondere durch Verrasten, an dem Abgasrohr als Sicherung gegen ungewolltes Losdrehen haltbar ist.

8. System nach einem der vorhergehenden Ansprüche,
**dadurch gekennzeichnet,**
**dass** die Eingriffsmittel (9) und/oder die Sicherungsmittel (5) einen Steigungsabschnitt zum axialen Verspannen des Abgasrohrs (1) oder des Abgasrohrabschnittes mit dem Sicherungselement (8) aufweisen.

9. System nach einem der vorhergehenden Ansprüche,
**dadurch gekennzeichnet,**
**dass** die Eingriffsmittel (9) einen Innengewindeabschnitt zum Verschrauben mit einem Außengewindeabschnitt des Abgasrohres (1) oder des Abgasrohrabschnittes aufweisen oder Bajonettverschlussmittel, vorzugsweise umfassend nach radial innen weisende, Bajonettverschlusselemente zum Zusammenwirken mit den Sicherungsmitteln (5) in der Art eines Bajonettverschlusses.

10. System nach einem der vorhergehenden Ansprüche,
**dadurch gekennzeichnet,**
**dass** das System ein Rohrstück (13) umfasst und dass ein Glattrohrabschnitt (3) des Abgasrohres (1) oder des Abgasrohrabschnittes in das, bevorzugt als Muffenrohr ausgebildetes, vorzugsweise starres, Rohrstück (13) eingeschoben ist und an diesem mittels des Sicherungselementes (8) axial gesichert ist.

11. System nach einem der vorhergehenden Ansprüche,
**dadurch gekennzeichnet,**
**dass** das Sicherungselement (8) mindestens einen, insbesondere laschenartigen, weiter bevorzugt in radialer Richtung federnd ausgebildeten, Hintergreifabschnitt (10) zum Hintergreifen eines Ringwulstes (16) eines bevorzugt als Muffenrohr ausgebildeten Rohrstücks (13) aufweist, in das ein Glattrohrabschnitt (3) des Abgasrohres (1) und/oder des Abgasrohrabschnittes einschiebbar ist.

12. Verfahren zum Festlegen eines Abgasrohres eines Abgasrohrsystems nach einem der vorherigen Ansprüche oder eines hiervon abgetrennten Abgasrohrabschnittes, umfassend mindestens zwei Glattrohrabschnitte (3) und mindestens einen Wellrohrabschnitt (2) an einem, bevorzugt als Muffenrohr ausgebildeten, bevorzugt eine als innenliegende Dichtung zur äußeren Anlage an einem der Glattrohrabschnitte ausgebildete Ringdichtung aufweisenden, Rohrstück (13) mit den Schritten:
- Einstecken eines Glattrohrabschnittes des Abgasrohres oder des Abgasrohrabschnittes in das Rohrstück, und
- Relativverdrehen des Eingriffsmittel (9) aufweisenden, bevorzugt hülsenförmigen, Sicherungselementes (8) relativ zu dem Abgasrohr (1), derart, dass die Eingriffsmittel (9) in Eingriff kommen mit den Sicherungsmitteln (5) des Abgasrohres
(1) und dadurch ein axial wirksamer Formschluss erreich wird.

13. Verfahren nach Anspruch 12,
**dadurch gekennzeichnet,**
**dass** das, vorzugsweise axial von dem Abgasrohr (1) durchsetzte, Sicherungselement (8), vorzugsweise vor dem Relativverdrehen zum Abgasrohr (1), axial an dem Rohrstück (13), insbesondere durch Hintergreifen eines Ringwulstes (16), gesichert wird.

## Claims

1. Exhaust gas pipe system, including an exhaust gas pipe (1) of plastic material for conducting exhaust gas from heating plants, preferably produced integrally in an extrusion blowing method, with rigid plain-ended pipe sections (3) arranged in an alternating manner and bendable corrugated pipe sections (2), wherein an exhaust gas pipe section with at least one corrugated pipe section (2) and two end-side plain-ended pipe sections (3) can be detached from the exhaust gas pipe (1), wherein securing means (5) configured integrally with the exhaust gas pipe (1) are molded to the exhaust gas pipe (1) and to each of the plain ended pipe sections (3) securing means (5) are assigned, which are configured in such a way that a preferably sleeve-shaped securing element (8) can be secured for establishing a form-fit acting in axial direction through a rotational movement relative to the exhaust gas pipe (1), and that the securing means (5) include a male thread section for screwing together with a female thread section or bayonet locking means for cooperating with mating sections of the securing element (8) in the type of a bayonet lock, or including an exhaust gas pipe section separated from such an exhaust gas pipe (1) with two end-side, plain-ended pipe sections (3) and with at least one bendable corrugated pipe section (2),
**characterized in that**
the exhaust gas pipe system includes a, preferably sleeve-shaped, securing element (8) which comprises engagement means (9) which are configured in such a way that the said means are connectable and/or connected to the securing means (5) of the exhaust gas pipe (1) or the exhaust gas pipe section through a rotation of the securing element (8) relative to the exhaust gas pipe (1) or the exhaust gas pipe section while forming a form-fit active in axial direction.

2. Exhaust gas pipe system according to claim 1,
**characterized in that**
securing means (5) are assigned to each plain ended pipe section (3) either only in the region of an axial end or on both axial end regions of the respective plain ended pipe section (3).

3. Exhaust gas pipe system according to one of the preceding claims,
**characterized in that**
the corrugated pipe sections (2) each comprise multiple annular waves arranged in axially neighboring, parallel radial planes with respect to an axial extension of the exhaust gas pipe (1), and **in that** the securing means are provided axially neighboring to the waves (4), in particular in a region adjacent to a plain-ended pipe section (3).

4. Exhaust gas pipe system according to one of the preceding claims,
**characterized in that**
the corrugated pipe sections (2) form, at least in sections, preferably axially continuously, the securing means (5) in the type of a male thread.

5. Exhaust gas pipe system according to one of the preceding claims,
**characterized in that**
the securing means (5) are configured in the type of a groove or furrow, in particular as a recess extending radially outward and in circumferential direction when seen from the inner side of the exhaust gas pipe.

6. Exhaust gas pipe system according to one of the preceding claims,
**characterized in that**
an exhaust gas pipe wall thickness of the securing means (5) corresponds to an exhaust gas pipe wall thickness of a plain-ended pipe section (3) and/or a corrugated pipe section (2), in particular in such a way that the wall thickness of the exhaust gas pipe (1) is axially continuously constant, at least approximately.

7. Exhaust gas pipe system according to one of the preceding claims,
**characterized in that**
the exhaust gas pipe, in particular the securing means (5), comprise arresting means, preferably including an axial and/or radial recess or elevation, which are configured in such a way that the securing element (5) can be held on the exhaust gas pipe (1), in particular by latching, as a protection against unintended loosening.

8. System according to one of the preceding claims,
**characterized in that**
the engagement means (9) and/or the securing means (5) comprise an inclination section for axially bracing the exhaust gas pipe (1) or the exhaust gas pipe section with the securing element (8).

9. System according to one of the preceding claims,
**characterized in that**
the engagement means (9) comprise a female thread section for screwing together with a male thread section of the exhaust gas pipe (1) or of the exhaust gas pipe section, or bayonet locking means, preferably including bayonet locking elements facing radially inward for cooperating with the securing means (5) in the type of a bayonet lock.

10. System according to one of the preceding claims,
**characterized in that**
the system includes a pipe piece (13), and **in that** a plain-ended pipe section (3) of the exhaust gas pipe (1) or the exhaust gas pipe section is inserted into the, preferably configured as socket pipe, preferably rigid, pipe piece (13) and is axially secured thereon using the securing element (8).

11. System according to one of the preceding claims,
**characterized in that**
the securing element (8) comprises at least one, in particular lug-type, further preferably configured resilient in axial direction, hinge section (10) for engaging behind an annular bulge (16) of a pipe piece (13) preferably configured as socket pipe, into which piece a plain-ended pipe (3) of the exhaust gas pipe (1) and/or the exhaust gas pipe section can be inserted.

12. Method for securing an exhaust gas pipe of an exhaust gas pipe system according to one of the preceding claims or an exhaust gas pipe section separated therefrom, including at least two plain-ended pipe sections (3) and at least one corrugated pipe section (2) on a pipe piece (13), preferably configured as socket pipe, preferably comprising a ring seal configured as internal seal for outer abutment on one of the plain-ended pipe sections, with the steps:
- Inserting a plain-ended pipe section of the exhaust gas pipe or the exhaust gas pipe section into the pipe piece, and
- rotating the, preferably sleeve-shaped, securing element (8) comprising engagement means (9) relative to the exhaust gas pipe (1) in such a way that the engagement means (9) engage the securing means (5) of the exhaust gas pipe (1) and an axially active positive fit is achieved thereby.

13. Method according to claim 12
**characterized in that**
the securing element (8), preferably axially penetrated by the exhaust gas pipe (1), is secured, preferably prior to the rotation relative to the exhaust gas pipe (1), axially on the pipe piece (13), in particular by engaging behind a annular bulge (16).

## Revendications

1. Système de tuyau d'échappement, comprenant un tuyau d'échappement (1) en matière plastique, pour la conduite de gaz d'échappement d'installations de chauffage, fabriqué de préférence en une seule pièce par un procédé d'extrusion-soufflage, avec des sections de tuyau lisse rigides (3) et des sections de tuyau ondulé flexibles (2) agencées en alternance,
dans lequel une section de tuyau d'échappement avec au moins une section de tuyau ondulé (2) et deux sections de tuyau lisse d'extrémité (3) peut être séparée du tuyau d'échappement (1), dans lequel des moyens de fixation (5) réalisés d'une seule pièce avec le tuyau d'échappement (1) sont formés sur le tuyau d'échappement (1), et les moyens de fixation (5) sont associés à chaque section de tuyau lisse et sont configurés de telle manière qu'un élément de fixation (8), de préférence en forme de douille, puisse être fixé à celui-ci par un mouvement de rotation relatif par rapport au tuyau d'échappement (1) pour réaliser un assemblage par emboîtement actif en direction axiale, et en ce que les moyens de fixation (5) comprennent une section à filetage extérieur pour le vissage avec une section à filetage intérieur de l'élément de fixation (8) ou des moyens d'assemblage à baïonnette destinés à coopérer avec des sections opposées de l'élément de fixation (8) à la manière d'un assemblage à baïonnette, ou comprenant une section de tuyau d'échappement séparée d'un tel tuyau d'échappement (1) avec deux sections de tuyau lisse (3) aux extrémités et avec au moins une section de tuyau ondulé flexible (2), **caractérisé en ce que** le système de tuyau d'échappement comprend un élément de fixation (8), de préférence en forme de douille, qui présente des moyens d'engagement (9), qui sont configurés de telle manière que ceux-ci soient et/ou puissent être, par un mouvement de rotation relatif de l'élément de fixation (8) par rapport au tuyau d'ëchappement (1) ou à la section de tuyau d'échappement, reliés aux moyens de fixation (5) du tuyau d'échappement (1) ou de la section de tuyau d'échappement avec formation d'un assemblage par emboîtement actif en direction axiale.

2. Système de tuyau d'échappement selon la revendication 1, **caractérisé en ce que** des moyens de fixation (5) sont associés à chaque section de tuyau lisse (3) soit uniquement dans la région d'une extrémité axiale soit aux deux régions d'extrémité axiales de la section de tuyau lisse respective (3).

3. Système de tuyau d'échappement selon l'une quelconque des revendications précédentes, **caractérisé en ce que** les sections de tuyau ondulé (2) présentent respectivement plusieurs ondulations annulaires et disposées dans des plans radiaux parallèles, axialement voisins, par rapport à une extension axiale du tuyau d'échappement (1), et **en ce que** les moyens de fixation (5) sont prévus axialement à proximité des ondulations (4), en particulier dans une région adjacente à une section de tuyau lisse (3).

4. Système de tuyau d'échappement selon l'une quelconque des revendications précédentes, **caractérisé en ce que** les sections de tuyau ondulé (2) forment, au moins localement, de préférence de façon continue axialement, les moyens de fixation (5) sous forme de filetage extérieur.

5. Système de tuyau d'échappement selon l'une quelconque des revendications précédentes, **caractérisé en ce que** les moyens de fixation (5), considérés à partir du côté intérieur du tuyau d'échappement, sont réalisés en forme de rainure ou de gorge, en particulier sous la forme d'un creux s'étendant en direction périphérique et radialement vers l'extérieur.

6. Système de tuyau d'échappement selon l'une quelconque des revendications précédentes, **caractérisé en ce qu'**une épaisseur de paroi de tuyau d'échappement des moyens de fixation (5) correspond à une épaisseur de paroi de tuyau d'échappement d'une section de tuyau lisse (3), et/ou d'une section de tuyau ondulé (2), en particulier de telle manière que l'épaisseur de paroi de tuyau d'échappement (1) soit de façon axialement continue, au moins approximativement constante.

7. Système de tuyau d'échappement selon l'une quelconque des revendications précédentes, **caractérisé en ce que** le tuyau d'échappement, en particulier les moyens de fixation (5), présentent des moyens de blocage, comprenant de préférence une cavité ou une saillie axiale et/ou radiale, qui est configurée de telle manière que l'élément de fixation (5) puisse être maintenu, en particulier par encliquetage, sur le tuyau d'échappement comme fixation contre un desserrage rotatif involontaire.

8. Système selon l'une quelconque des revendications précédentes, **caractérisé en ce que** les moyens d'engagement (9) et/ou les moyens de fixation (5) présentent une section en pente pour le serrage axial du tuyau d'échappement (1) ou de la section de tuyau d'échappement avec l'élément de fixation (8).

9. Système selon l'une quelconque des revendications précédentes, **caractérisé en ce que** les moyens d'engagement (9) présentent une section à filetage intérieur pour le vissage avec une section à filetage extérieur du tuyau d'éohappement (1) ou de la section de tuyau d'échappement ou des moyens d'assemblage à baïonnette, comprenant de préférence des éléments d'assemblage à baïonnette tournés radialement vers l'intérieur destinés à coopérer avec les éléments de fixation (5) à la manière d'un assemblage à baïonnette.

10. Système selon l'une quelconque des revendications précédentes, **caractérisé en ce que** le système comprend une pièce tubulaire (13) et **en ce qu'**une section de tuyau lisse (3) du tuyau d'échappement (1) ou de la section de tuyau d'échappement est insérée dans la pièce tubulaire (13), réalisée de préférence en forme de manchon, de préférence rigide, et est fixée axialement à celle-ci au moyen de l'élément de fixation (8).

11. Système selon l'une quelconque des revendications précédentes, **caractérisé en ce que** l'élément de fixation (8) présente au moins une section d'accrochage arrière (10), en particulier en forme de patte, de préférence encore réalisée sous forme élastique en direction radiale, pour l'accrochage à un bourrelet annulaire (16) d'une pièce tubulaire (13) configurée de préférence en forme de manchon tubulaire, dans laquelle une section de tuyau lisse (3) du tuyau d'échappement (1) et/ou de la section de tuyau d'échappement peut être insérée

12. Procédé de fixation d'un tuyau d'échappement d'un système de tuyau d'échappement selon l'une quelconque des revendications précédentes ou d'une section de tuyau d'échappement séparée de celui-ci, comprenant au moins deux sections de tuyau lisse (3) et au moins une section de tuyau ondulé (2) à une pièce tubulaire (13) configurée de préférence sous forme de manchon tubulaire, présentant de préférence un joint d'étanchéité intérieur pour l'appui extérieur sur un joint d'étanchéité annulaire formé sur une des sections de tuyau lisse, présentant les étapes suivantes:
- engager une section de tuyau lisse du tuyau d'échappement ou de la section de tuyau d'échappement dans la pièce tubulaire, et
- opérer une rotation relative de l'élément de fixation (8) de préférence en forme de douille, présentant des moyens d'engagement (9), par rapport au tuyau d'échappement (1), de telle manière que les moyens d'engagement (9) viennent en engagement avec les moyens de fixation (5) du tuyau d'échappement (1) et permettent d'obtenir ainsi un assemblage par emboîtement axialement actif.

13. Procédé selon la revendication 12, **caractérisé en ce que** l'élément de fixation (8), traversé de préférence axialement par le tuyau d'échappement (1), est fixé axialement à la pièce tubulaire (13), en particulier par accrochage arrière d'un bourrelet annulaire (16), de préférence avant la rotation relative par rapport au tuyau d'échappement (1).
